# EUROPEAN PATENT SPECIFICATION

(11) **EP 1 317 219 B1**
(45) Date of publication and mention of the grant of the patent: **03.01.2007**
(21) Application number: 01970826.2
(22) Date of filing: 13.09.2001
(51) Int. Cl.: A61C 1/18, F16C 19/02

(54) **IMPROVED BEARING FOR DENTAL HANDPIECE**
VERBESSERTES KUGELLAGER FÜR ZAHNÄRZTLICHES HANDSTÜCK
ROULEMENT AMELIORE POUR PIECE A MAIN DENTAIRE

(30) Priority: 14.09.2000 US 232256 P
(43) Date of publication of application: 11.06.2003
(73) Proprietor: DENTSPLY INTERNATIONAL, INC., York, PA 17405-0872 (US)
(72) Inventor: NOVAK, Eugene, J., Deerfield, IL 60015 (US); PAPANEK, Tom, Lake Forest, IL 60045 (US); AYZENSHETYN, Milhail, Buffalo Grove, IL 60089 (US)
(74) Representative: Wächtershäuser, Günter
(86) International application number: PCT/US2001/028436
(87) International publication number: WO 2002/022039

(56) References cited:
- WO-A-95/08960
- GB-A- 851 110
- US-A- 3 292 980
- US-A- 3 646 677
- US-A- 4 966 552
- US-A- 5 676 542

## Description

### TECHNICAL FIELD

The present invention is directed toward dental handpieces. More particularly, the invention is directed toward a dental handpiece having an improved bearing construction. The inventive bearing has a thick outer race.

### BACKGROUND OF THE INVENTION

Audible sound levels in air-turbine dental highspeed handpieces are currently known to range as high as 65-78 dBA or sometimes higher. This noise level is a primary complaint of users. Furthermore, there is a peak in the sound spectra at about 7,000 Hz, corresponding to the rotation speed of 425,000 rpm, and characterized by users as a "high pitched whine". It is clearly desirable to reduce the sound emitted by dental handpieces. It is believed that the bearing is one of the sources of this noise. For example, the Gyro handpiece available from Bien Air, has an air bearing and is known to have a lower sound intensity at 7,000 Hz.

Bearings commonly used in dental handpieces today have thin cross sections which make it difficult to fabricate (grind) the bearing races to the desired precision (often required to be 25.4·10⁻⁶ cm (10 X 10⁻⁶ inches) roundness and concentricity). Any improvements in bearing precision and surface finish are expected to improve bearing life and reduce bearing noise, are therefore, desirable.

Dental handpieces of any type or design are useful in conjunction with the bearings according to the present invention. One particularly useful class of such handpieces are conventionally known as "high speed" handpieces, and are often air-driven. Examples of such handpieces are shown for example, in U.S. Pat. Nos. 3,646,677, 4,089,115, 4,279,597 and 5,040,980.

### SUMMARY OF THE INVENTION

It is therefore, an object of the invention to provide a dental handpiece.

It is another object of the invention to provide a dental handpiece improved with respect to its bearing construction.

It is a further object of the invention to provide a bearing construction for a dental handpiece which improves the audible sound qualities of the handpiece.

These and other objects of the invention which will become apparent from the following discussion, are accomplished by the invention as hereinafter described and claimed.

In general a dental handpiece according to the invention is defined by the claims and comprises a rotor and a ball bearing assembly supporting said rotor. Said ball bearing assembly having at least one ball and a bearing, said bearing having an inner and an outer race, said outer race having a thickened diameter as defined by the claim.

### BRIEF DESCRIPTION OF THE DRAWING

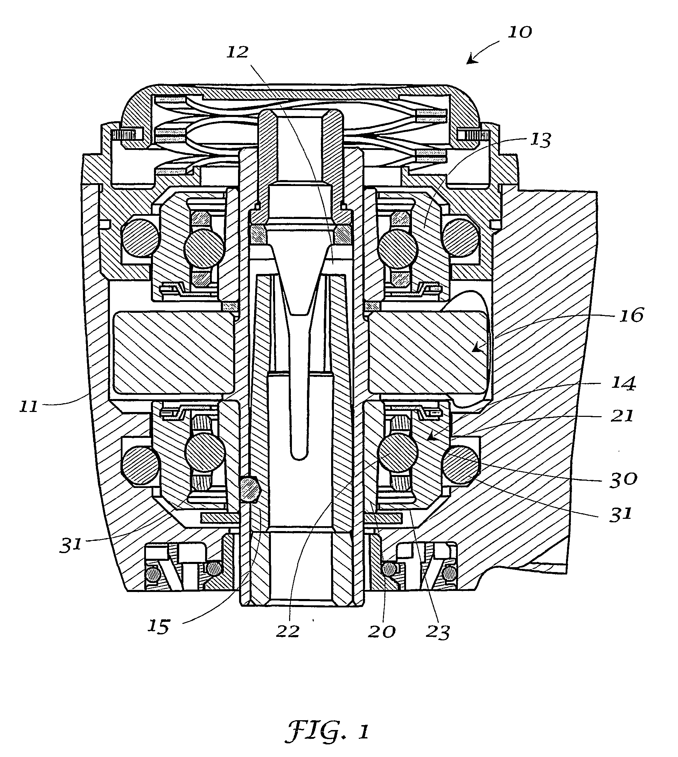

FIGURE 1 is a side elevational view of the working head portion of a dental handpiece, having the bearing construction according to the present invention.

### PREFERRED EMBODIMENTS FOR CARRYING OUT THE

### INVENTION

The handpiece selected for illustration is an air-driven handpiece 10 having a housing 11 with an internal chamber 12, and a pair of ball bearing assemblies 13 and 14 supporting rotor 15 for rotation within chamber 12 defined by the housing 11. The rotor includes any conventional driving means such as for example, an air-turbine16 for rotatably driving rotor 15. The turbine depicted in FIGURE 1 is an axial-flow turbine which is driven by air, but of course, can be of any conventional design.

Bearing assemblies 13 and 14 will be discussed with respect to bearing assembly 14, it being understood that bearing assembly 13 may be of similar design and construction. Bearing assembly 14 has an inner race 20 and an outer race 21. As shown, bearing assembly 14 supports rotor 15 in such a manner that rotor 15 is supported in the desired location, but is also free to rotate when for example, driven by turbine 16. Bearing assembly 14 also includes ball bearing 22. Such bearing assemblies as bearing assembly 14 are to such point, conventional in the art, and may also include according to the invention, a bearing shield 23 which is integral with the outer race.

According to the invention, outer race 21 is thicker than has heretofore been known in the art. For example, the outer race according to the invention and used in a dental handpiece of otherwise conventional size, has a diameter of 0.71 cm (0.28 inches). The inventive outer race 21 is approximately double in thickness over those bearings conventionally known in the art, and has as much as 0.076 cm (0.03 inches) greater in diameter as compared to previous dental handpieces.

By way of example, TABLE I shows a comparison of an exemplary dental handpiece bearing construction according to the invention, as compared to a commercially available dental handpiece, namely an XGT handpiece available from DENTSPLY International Inc.

**TABLE I**

| | current XGT bearing | Inventive bearing |
|---|---|---|
| inner diameter of inner race | (.125") | (.125") |
| | 0.32 cm | 0.32 cm |
| diameter of inner race ball track | (.166" approx.) | (.166" approx.) |
| | 0.42 cm | 0.42 cm |
| diameter of outer race ball track | (.220 approx.) | (.220 approx.) |
| | 0.56cm | 0.56 cm |
| outer diameter of outer race | (.250") | (.280") |
| | 0.64cm | 0.71cm |

Also according to the present invention, the bearing does not have a flange, which in the previous conventional bearings served to transmit axial force from an elastomeric suspension "quad-ring". Rather, the new bearing has a slight shoulder 30 upon which an elastomeric suspension o-ring 31 rests. O-ring 31 may be held within a groove 32. Axial force is still transferred from the 31 o-ring to the bearing outer race 21 to pre-load the bearing, but the geometry of the inventive bearing directs the vector of that force in-line with the contacts between ball 22 and ball grooves. It is believed that this directed force improves bearing performance under varying load conditions.

The races of the bearing 14 may be made from any conventional material useful for dental applications, such as for example, 440C "micro-melt" stainless steel.

As stated above, the outer race 21 of the inventive bearing 14 also includes an integral shield 23 on one side, in contrast to typical bearing practice in which one or both shields are separate rings welded or otherwise held in place. The shield on the opposite side of the new bearing is attached by any conventional means, such as spot-welding to the outer race 21 in a conventional manner.

The retainer material of the bearing 14 may be any conventional material, such as Torlon, as currently used in many dental bearings. Of course, any retainer material or configuration could be used with the thick outer race.

The balls 22 of the new bearing are preferably made of stainless steel, as currently used in almost all dental bearings. Of course, any allowable ball material could be used with the thick outer race.

Increased mass of the outer race may be achieved by using, two or more different materials to fabricate the outer race. The innermost portion of the race would be of a material (e.g. hardened steel or ceramic) selected to optimize bearing performance and life. The outermost portion could be a material chosen for sound damping properties or greater density. Additionally, a thin layer of adhesive, plastic, or elastomer between the two layers could further dampen sound transmission. A sleeve of any material surrounding the outer race of a conventional bearing may be employed.

The bearing could also incorporate other features:
A shield on one side which is integrated (formed with) the outer race.
A radiused flange on the outer race sized to mate with an elastomeric o-ring for suspension.
A bearing in which the inner race is comprised of multiple materials or sleeves, as describe above for the outer race.
Various materials for the races, balls, and ball retainer. Various configurations of ball retainer.
Various configurations and geometry's of ball grooves. Various sizes ofballs.
Reduced audible noise.
Reduced bearing distortion under load.
Increased bearing life.

Easier to manufacture to high tolerances. Less bearing distortion during manufacturing (during grinding, shield welding, and bearing press-fit assembly).

A unique, non-interchangeable, geometry.

Prototype bearings have been assembled into prototype handpieces and testing shows an 8 - 12 dB reduction in noise.

While in the foregoing specification a detailed description of the invention has been set forth for the purpose of illustration, variations of the details herein given may be made by those skilled in the art without departing from the invention.

## Claims

1. A dental handpiece of the type having a rotor supported by a ball bearing assembly, said ball bearing assembly having at least one ball and a bearing, said bearing having an inner and an outer race, wherein the bearing has a thick outer race and the following bearing construction:
| | |
|---|---|
| inner diameter of inner race | (.125") |
| | 0.32 cm |
| diameter of inner race ball track | (.166" approx.) |
| | 0.42 cm |
| diameter of outer race ball track | (.220 approx) |
| | 0.56 cm |
| outer diameter of outer race | (.280") |
| | 0.71 cm |

## Patentansprüche

1. Zahnärztliches Handstück des Typs, das einen durch eine Kugellageranordnung gehaltenen Rotor aufweist, die Kugellageranordnung mindestens eine Kugel und ein Lager aufweist, wobei das Lager einen inneren und einen äußeren Laufring aufweist, worin das Lager einen dicken äußeren Laufring und die folgende Lagerkonstruktion aufweist:
| | |
|---|---|
| Innendurchmesser des inneren Lauf rings | 0,32 cm (0,125") |
| Durchmesser der inneren Laufring-Kugelspur | 0,42 cm (etwa 0,166") |
| Durchmesser der äußeren Laufring-Kugelspur | 0,56 cm (etwa 0,220) |
| Außendurchmesser des äußeren Laufrings | 0,71 cm (0,280") |

## Revendications

1. Pièce à main dentaire du type comportant un rotor supporté par un agencement de roulement à billes, ledit agencement de roulement à billes comportant au moins une bille et un roulement, ledit roulement ayant un chemin interne et un chemin externe, le roulement ayant un chemin externe épais et la construction de roulement suivante :
| | |
|---|---|
| diamètre intérieur de chemin interne | 0,32 cm |
| | (0,125 pouce) |
| diamètre de gorge à billes de chemin interne | 0,42 cm |
| | (0,166 pouce) |
| diamètre de gorge à billes de chemin externe | 0,56 cm |
| | (0,220 pouce) |
| diamètre extérieur de chemin externe | 0,71 cm |
| | (0,280 pouce) |
